# EUROPEAN PATENT APPLICATION

(11) **EP 4 746 160 A1**
(43) Date of publication of application: **20.05.2026**
(21) Application number: 25752342.3
(22) Date of filing: 05.02.2025
(51) Int. Cl.: H01M 50/293, H01M 50/383, H01M 50/204, H01M 50/507, H01M 50/271, H01M 50/342

(54) **BATTERY PACK AND DEVICE COMPRISING SAME**

(30) Priority: 07.02.2024 KR 20240018639
(71) Applicant: LG Energy Solution, Ltd., Seoul 07335 (KR)
(72) Inventor: CHOI, Wansup, Daejeon 34122 (KR)
(74) Representative: Plasseraud IP
(86) International application number: PCT/KR2025/001657
(87) International publication number: WO 2025/170296

(57) **Abstract**

A battery pack according to certain aspects of the present disclosure comprises: a plurality of battery modules and a pack frame in which the battery modules are housed, wherein the battery module comprises a battery cell stack in which a plurality of battery cells including electrode leads are stacked; and a module frame in which the battery cell stack is housed. The battery pack comprises a block located to face one surface of the battery module in a direction in which the electrode leads protrude, and the block is attached to one surface or both surfaces of a partition wall for housing the battery modules.

## Description

### [TECHNICAL FIELD]

### Cross-Reference to Related Application(s)

This application claims priority to and the benefit of Korean Patent Application no. KR10-2024-0018639, filed on February 7, 2024, with the Korean Intellectual Property Office, the disclosure of which is hereby incorporated by reference in its entirety

The present disclosure relates to a battery pack and a device including the same, and more particularly, to a battery pack that can effectively control the propagation of heat by inducing the discharge of gases, flames or the like to an upper end side of the module when an event such as an internal short circuit or fire occurs even without providing an end plate, and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are disposed with a separator being interposed between them, and a battery case, that seals and houses the electrode assembly together with the electrolyte solution.

Generally, according to the exterior shapes of battery cases, the lithium secondary battery may be classified into a can-type secondary battery in which the electrode assembly is mounted in a metal can, and a pouch-type secondary battery in which the electrode assembly is mounted in a pouch made of an aluminum laminate sheet.

In the case of a secondary battery used for small-sized devices, two to three battery cells are disposed, but in the case of a secondary battery used for a medium- and large-sized device such as automobiles, a battery module is used, which includes multiple battery cells electrically connected to each other. In the battery module, the multiple battery cells are connected in series or parallel to form a battery cell stack, which improves the capacity and the power. Further, one or more battery modules can be mounted together with various control and protection systems such as a BDU (battery disconnect unit), a BMS (battery management system) and a cooling system to form a battery pack.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module stacked with a large number of battery cells, and a battery pack mounted with such a battery module can obtain high output, but it is not easy to remove heat generated from the battery cells during charging and discharging. When the heat dissipation of the battery cell is not properly performed, deterioration of the battery cells is accelerated, the lifetime is shortened, and the possibility of explosion or ignition increases.

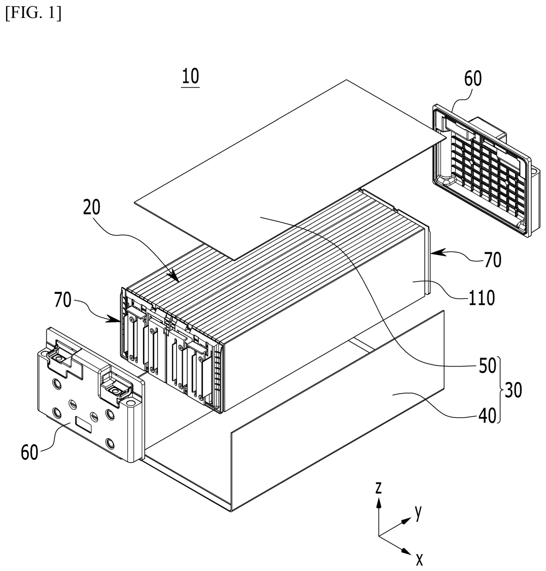

FIG. 1 is a perspective view showing a conventional battery module.

Referring to FIG. 1, a conventional battery module 10 may include a module frame 30 that houses a battery cell stack 20, and end plates 60 that cover the front and rear surfaces of the battery cell stack 20. In addition, the conventional battery module 10 may further include a busbar frame 70 located between the end plate 60 and the battery cell stack 20.

The module frame 30 may include a U-shaped frame 40 in which an upper surface, a front surface, and a rear surface are opened, and an upper plate 50 that covers the upper part of the battery cell stack 20. However, the module frame 30 is not limited thereto, and may be replaced with a frame of other shape, such as an L-shaped frame or a mono-frame that surrounds the battery cell stack 20 except for the front and rear surfaces.

The busbar frame 70 may be mounted with a busbar that electrically connects the electrode leads within the battery cell stack 20 in order to electrically connect the battery cells within the battery cell stack 20 that is stacked in parallel.

In order to improve the heat propagation delay performance, a hole (not shown) is provided at an upper end of the battery module 10, so that gas or flame generated when an event occurs can be discharged to the upper end side of the battery module 10. In this case, in order to discharge gas or flame to the upper end side of the battery module 10, all remaining surfaces except the upper end of the battery module 10 must be hermetically sealed. For this purpose, the battery module 10 is generally structured such that the remaining surfaces except the upper end of the battery module 10 are sealed with a module frame 30 or an end plate 60. In particular, the end plate 60 covers the opened one surface or both surfaces of the module frame 30. The end plate 60 can be joined to the module frame 30 by welding. Thereby, the battery module 10 can be sealed on the remaining surfaces except the upper end by the module frame 30 and the end plate 60 covering the opened one surface or both surfaces of the module frame 30.

When the end plate 60 is included in the battery module 10, the energy density decreases and the production cost of the battery module 10 increases. Furthermore, when the end plate 60 is attached to the battery module 10 by welding, welding equipment is introduced in the manufacturing process of the battery module 10, and a welding process is added thereto, which increases the production cost of the battery module 10.

### [DETAILED DESCRIPTION OF THE INVENTION]

### [Technical Problem]

It is an object of the present disclosure to prevent the discharge of gases, flames, or the like to the front side or lateral-side when an event such as an internal short circuit or fire occurs inside a battery module, and specifically, to provide a battery pack that can effectively control the propagation of heat by inducing the discharge of gases, flames or the like to an upper end side of the module even without providing an end plate, and a device including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery pack comprising a plurality of battery modules and a pack frame in which the battery modules are housed, wherein the battery module comprises: a battery cell stack in which a plurality of battery cells including electrode leads are stacked; and a module frame in which the battery cell stack is housed, wherein the battery pack comprises a block located to face one surface of the battery module in a direction in which the electrode leads protrude, and wherein the block is attached to one surface or both surfaces of a partition wall for housing the battery modules.

The block may comprise a refractory material.

The battery module may comprise a busbar that connects the electrode leads, and the one surface of the battery module may be opened so that the electrode leads and the busbar are exposed on the one surface of the battery module in a direction in which the electrode leads protrude.

The one surface of the battery module in the direction in which the electrode lead protrudes may abut on the block.

The battery module may comprise a busbar frame assembly located on one side of the battery cell stack in a direction in which the electrode leads protrude, and the busbar frame assembly may comprise a busbar frame; and at least one busbar disposed on the busbar frame and connected to the electrode leads.

The battery pack may comprise a busbar frame assembly cover that covers the busbar frame assembly.

The upper end part of the module frame may be formed with at least one venting hole for discharging internal gas.

The battery pack may comprise a module frame cover that covers the upper end part of the module frame.

The module frame cover may be formed with a rupture part that is located so as to correspond to the venting hole and structured to be ruptured at a certain pressure or higher.

An opening may be formed in an area excluding a connecting part in the circumference of the rupture part, and the rupture part may have a form connected to the module frame cover by the connecting part.

On the upper end part of the module frame cover, the opening may be formed outside the venting hole when viewed along a direction perpendicular to the upper end part of the module frame cover.

### [Advantageous Effects]

According to certain embodiments of the present disclosure, even if the battery module is not provided with an end plate, gases, it is possible to induce the discharge of flames or the like to the upper end side of the battery module when an event such as an internal short circuit or fire occurs. Thereby, it is possible to effectively control the heat propagation of the battery module.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional battery module.
FIG. 2 is a perspective view showing a battery pack according to certain embodiments of the present disclosure.
FIG. 3 is a partial perspective view showing a battery pack according to certain embodiments of the present disclosure.
FIG. 4 is a perspective view showing a pouch-type battery according to certain embodiments of the present disclosure.
FIG. 5 is an exploded perspective view showing one of the battery modules included in the battery pack of FIG. 2.
FIG. 6 is an exploded perspective view of a battery module and a battery pack according to certain embodiments of the present disclosure.
FIG. 7 is a perspective view of a battery module and a battery pack according to certain embodiments of the present disclosure.
FIG. 8 is a plan view of a battery module and a battery pack according to certain embodiments of the present disclosure.
FIG. 9 is a cross-sectional view showing a cross section of a battery module taken along the cutting line A-A' of FIG. 8.
FIG. 10 is a cross-sectional view of a battery module according to certain other embodiments of the present disclosure.
FIG. 11 is a plan view of a battery module according to certain embodiments of the present disclosure.
FIG. 12 is an exploded perspective view showing a battery module according to certain embodiments of the present disclosure.
FIG. 13 is a perspective view of a battery module according to certain embodiments of the present disclosure.
FIG. 14 is a plan view of a battery module according to certain embodiments of the present disclosure.
FIG. 15 is an exploded perspective view of a battery module according to certain embodiments of the present disclosure.
FIG. 16 is a perspective view of a battery module according to certain embodiments of the present disclosure.
FIG. 17 is a plan view of a battery module according to certain embodiments of the present disclosure.
FIG. 18 is a cross-sectional view showing a cross section of a battery module taken along the cutting line B-B' of FIG. 17.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated. The drawings depict the thickness in an enlarged scale to clearly show different layers and regions. Further, the drawings exaggerate the thickness of a certain layer or region to facilitate the description thereof.

Further, when a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

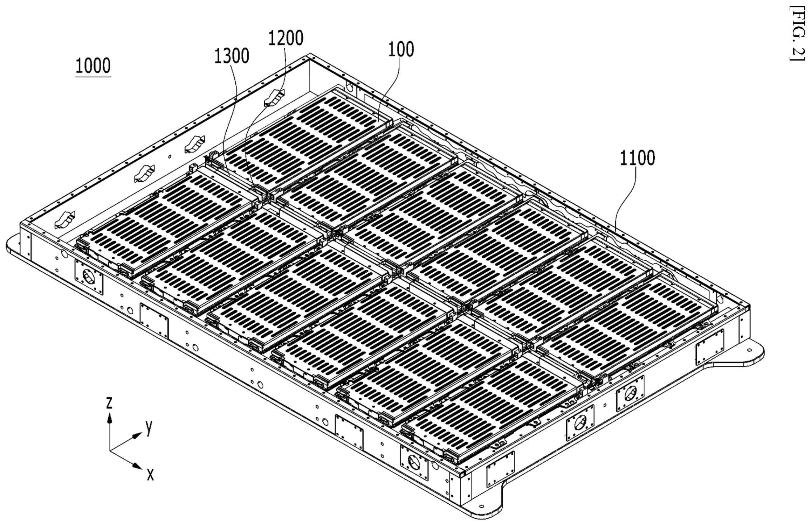

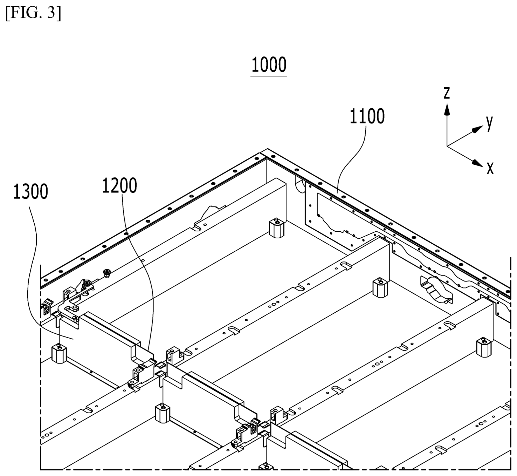

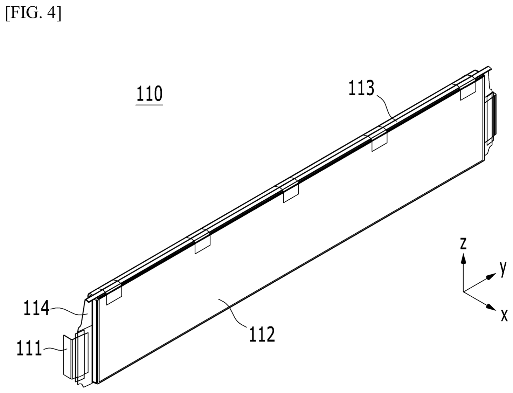

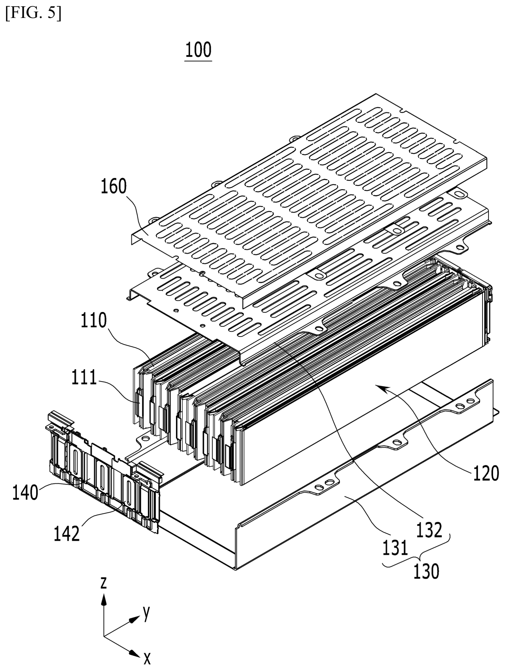

FIG. 2 is a perspective view showing a battery pack 1000 according to certain embodiments of the present disclosure. FIG. 3 is a partial perspective view showing a battery pack 1000 according to certain embodiments of the present disclosure. FIG. 4 is a perspective view showing a pouch-type battery according to certain embodiments of the present disclosure. FIG. 5 is an exploded perspective view showing one of the battery modules 100 included in the battery pack 1000 of FIG. 2.

Referring to FIGS. 2 to 5, a battery pack 1000 according to certain embodiments of the present disclosure includes a plurality of battery modules 100 and a pack frame 1100 in which the battery modules 100 are housed. The battery pack 1000 includes a block 1300 located so as to face one surface of the battery module 100 in a direction in which the electrode leads 111 protrude (+y-axis or -y-axis direction in FIG. 5).

The battery pack 1000 includes a partition wall 1200 for housing the battery module 100. The battery modules 100 housed in the battery pack 1000 may be located so as to be divided from each other by the partition wall 1200. The partition wall 1200 may have various shapes, materials, and the like according to the shape, arrangement, and the like of the battery modules 100 housed in the battery pack 1000. Various types of battery modules 100 can be accommodated more stably and easily inside the pack frame 1100 by the partition wall 1200. The block 1300 is attached to one surface or both surfaces of the partition wall 1200 for housing the battery modules 100. The block 1300 may be located between the battery module 100 and the partition wall 1200. Thereby, when an event such as an internal short circuit or fire occurs, gases, flames or the like emitted from the battery module 100 may not be propagated to another adjacent battery module 100.

The thickness of the partition wall 1200 may be determined by the size of the battery pack 1000, the electric capacity of the battery module 100, and the like. Preferably, the partition wall 1200 may have a thickness of 2 mm to 3 mm.

The block 1300 is sufficient if it includes a material that is not deformed by high-temperature gas or flame. The block 1300 is not limited to the shape, material, number, and the like.

The block 1300 may include a refractory material. The refractory material may suppress ignition caused by gas or flame discharged from the battery module 100 when an event such as an internal short circuit or fire occurs. The refractory material may exhibit excellent heat insulation properties when ignition occurs. Therefore, the refractory material can suppress the electrical connection between the partition wall 1200 and the busbar 142 when an ignition occurs. In addition, the refractory material can prevent the discharge of gases, flames or the like to the front side or lateral-side.

Next, the battery module 100 according to the present embodiments will be described with reference to FIG. 5 again. However, the battery module 100 described below is an exemplary structure of a battery module 100 including a plurality of battery cells 110, and various types of battery modules including a plurality of battery cells 110 can be applied.

Referring to FIGS. 4 and 5, the battery module 100 according to the present embodiment includes a battery cell stack 120 in which a plurality of battery cells 110 including electrode leads 111 are stacked, and a module frame 130 in which the battery cell stack 120 is housed. The battery module 100 according to the present embodiments may include a busbar 142 that connects the electrode leads 111. The electrode leads 111 of the battery cells 110 may be electrically connected to each other via the busbar 142.

The battery cell 110 may include an electrode assembly (not shown) and a cell case that houses the electrode assembly. The cell case may include a housing part 112 that houses the electrode assembly (not shown), a sealing part 113 formed at the edge of the battery cell 110 to seal the electrode assembly (not shown), and a terrace part 114 formed to extend from the cell case in a direction in which the electrode leads 111 protrude.

Although not shown in the figure, the cell case may be sealed by abutting and heat-sealing the edges of a pair of cases made of a multi-layer pouch film in which a resin layer/metal layer/resin layer is stacked in sequence. In this case, a housing part 112 may be formed in at least one of the pair of cases, and the sealed edge portion may form a sealing part 113.

The battery cell 110 may have a structure in which two electrode leads 111 face each other and protrude from both side ends of the battery main body. In another embodiment, a structure in which all the electrode leads 111 of the battery cell 110 protrude in one direction is also possible. One of the electrode leads 111 is a cathode lead, and the other is an anode lead. The battery cell 110 may also be manufactured in a pouch shape in which an electrode assembly (not shown) is housed in a housing part 112 including the battery main body.

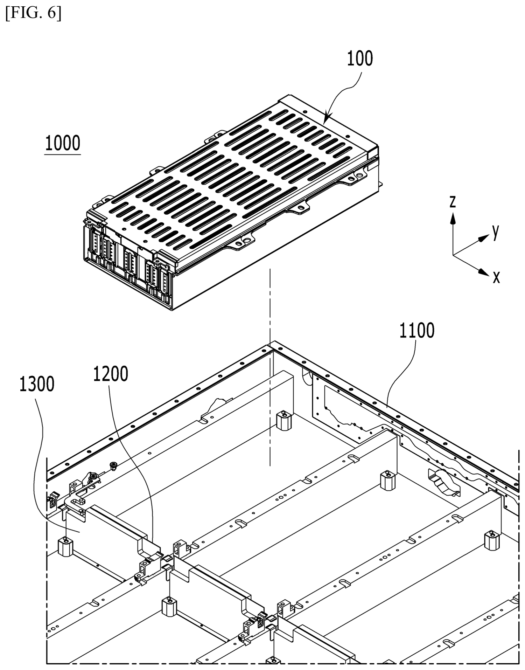

The housing part 112 may house the electrode assembly together with the electrolyte solution, and the sealing part 113 may be sealed under the state where a part of the electrode lead 111 protrudes outward. Further, the terrace part 114 may be a portion located on both sides of the sealing part 113 with respect to the full length direction of the battery cell 110 (Y-axis direction of FIGS. 5 and 6). That is, the electrode lead 111 may protrude outward through the terrace part 114.

As described above, as compared to FIG. 1 showing the conventional battery module 10, the battery module 100 according to the present embodiments is not provided with an end plate 60. In other words, the battery module 100 according to the present embodiments has a structure in which a busbar frame assembly 140 described below is exposed. In the conventional battery module 10, an end plate 60 is attached onto the front and rear surfaces of the battery module 10 by welding in order to seal all surfaces except the upper end part of the battery module 10 so that flame and gas are ejected to the upper end of the battery module 10 when an event occurs. When an end plate 60 is introduced to the battery module 10, the energy density decreases and the production cost of the battery module 10 increases. Further, when the end plate 60 is attached to the battery module 10 by welding, welding equipment is introduced in the manufacturing process of the battery module 10 and a welding process is added thereto, which increases the production cost of the battery module 10.

The battery module 100 according to certain embodiments of the present disclosure includes the block 1300 in the partition wall 1200 of the battery pack 1000 even without providing an end plate, thereby inducing gases, flames or the like to be discharged to the upper end side of the battery module 100 when an event such as an internal short circuit or a fire occurs. This makes it possible to effectively control the heat propagation of the battery module 100.

In other words, the battery module according to certain embodiments of the present disclosure can effectively control the propagation of heat without providing an end plate. Since the end plate is not provided, welding equipment is not required in the manufacturing process of the battery module 100, which may reduce equipment costs. In addition, since the welding process is not required, the production cost of the battery module 100 can be reduced. The defective rate due to the welding process is also reduced, so that the yield of the battery module 100 can be stably secured. The production cost of the battery module 100 can also be reduced.

As shown in FIG. 5, the module frame 130 can be composed of a lower end module frame 131 and an upper end module frame 132. The lower end module frame 131 and the upper end module frame 132 can be joined by bolt fastening or welding, and the joining method is not limited. The module frame 130 is not limited thereto, and may be replaced with a frame of other shape, such as an L-shaped frame or a mono-frame that surrounds the battery cell stack 120 except for the front and rear surfaces.

As described above, the battery cell 110 and battery module 100 described in FIG. 5 are exemplary structures, and the type or shape of the battery cell 110 and the battery module 100 included in the battery pack 1000 (see FIG. 2) is not particularly limited. That is, the pouch-type battery cell 110 is described as an illustrative example, prismatic battery cells or cylindrical battery cells can also be applied to the battery module 100 according to certain embodiments of the present disclosure. Furthermore, although the battery module 100 configured to house the battery cells 110 in the module frame 130 is described as an illustrative example, a CTP (cell to pack) type battery module configured to mount a plurality of battery cells 110 in the battery pack 1000 (see FIG. 2) without being housed in the module frame 130 can also be applied as an illustrative example of the present disclosure.

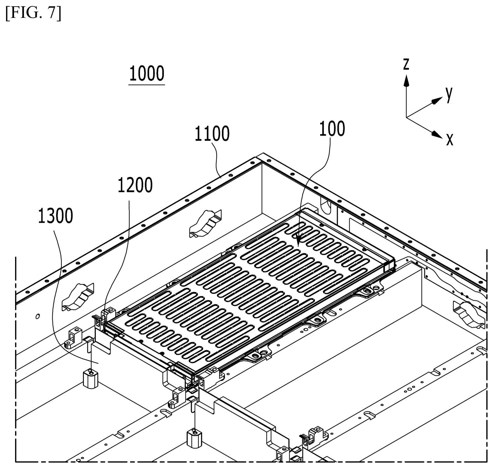

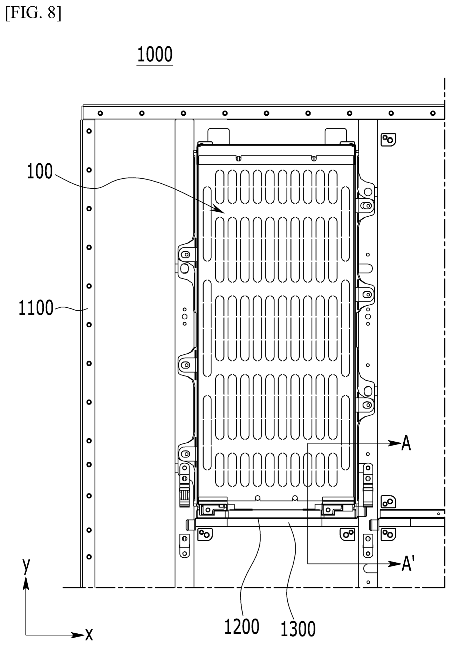

FIG. 6 is an exploded perspective view of a battery module 100 and a battery pack 1000 according to certain embodiments of the present disclosure. FIG. 7 is a perspective view of a battery module 100 and a battery pack 1000 according to certain embodiments of the present disclosure. FIG. 8 is a plan view of a battery module 100 and a battery pack 1000 according to certain embodiments of the present disclosure. In particular, FIGS. 6 to 8 show the direction and position of the battery module 100 to be assembled into the battery pack 1000, and also show a correspondence relation between the configuration of the battery module 100 and the configuration of the battery pack 1000.

Referring to FIGS. 5 to 8, a battery module 100 according to certain embodiments of the present disclosure may have one surface opened so that the electrode lead 111 and the busbar 142 are exposed on one surface in a direction in which the electrode lead 111 protrudes.

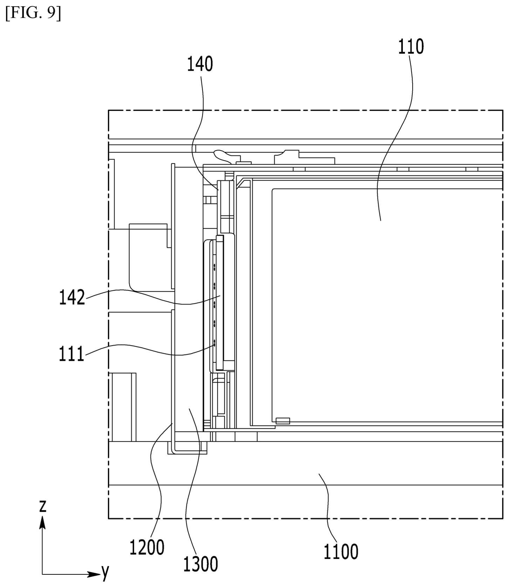

FIG. 9 is a cross-sectional view showing a cross section of a battery module 100 taken along the cutting line A-A' of FIG. 8. In particular, FIG. 9 shows the correspondence relation between the busbar 142 of the battery module 100 and the block 1300 of the battery pack 1000.

Referring to FIGS. 8 and 9, when an event occurs, the flame and gas may be discharged along a direction in which the electrode lead 111 protrudes from the battery cell 110. That is, the flame and gas may be discharged toward one surface of the battery module 100 where the electrode lead 111 and the busbar 142 are exposed (the +y-axis or -y-axis direction of FIG. 9). At this time, the discharge path of the flame and gas can be changed to the upper end of the battery module 100 (the +z-axis direction of FIG. 9) by the partition wall 1200 of the battery pack 1000 and the block 1300 provided in the partition wall 1200. That is, the flame and gas discharged along the direction in which the electrode lead 111 protrudes from the battery cell 110 can be blocked by the block 1300 provided in the partition wall 1200, and induced toward the upper end of the battery module 100.

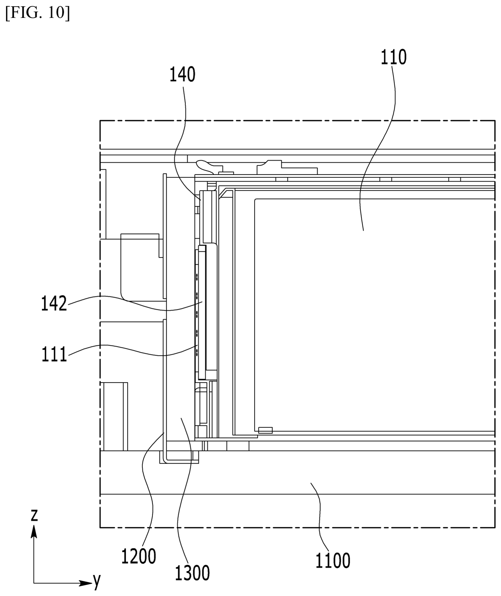

FIG. 10 is a cross-sectional view of a battery module 100 according to certain other embodiments of the present disclosure.

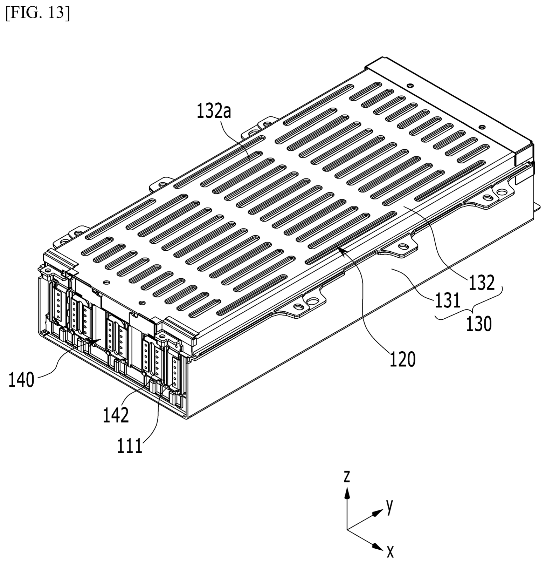

Referring to FIGS. 8 and 10, one surface of a battery module 100 according to certain other embodiments of the present disclosure may abut against a block 1300 on one surface in the direction in which the electrode leads 111 protrude. One surface of the battery module 100 abuts on the block 1300, and therefore when an event occurs, flame and gas may not be discharged toward one surface of the battery module 100 where the electrode lead 111 and the busbar 142 are exposed (+y-axis or -y-axis direction of FIG. 10). The flame and gas may be discharged to the upper end of the battery module 100 through a venting hole 132a (see FIG. 13), which will be described later.

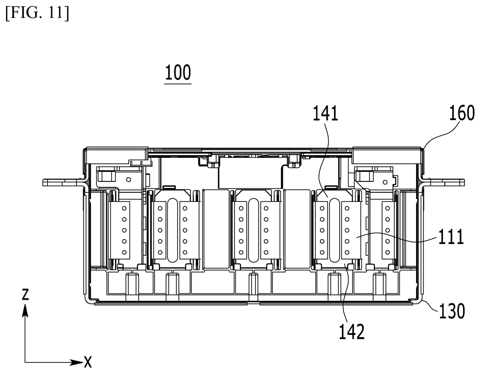

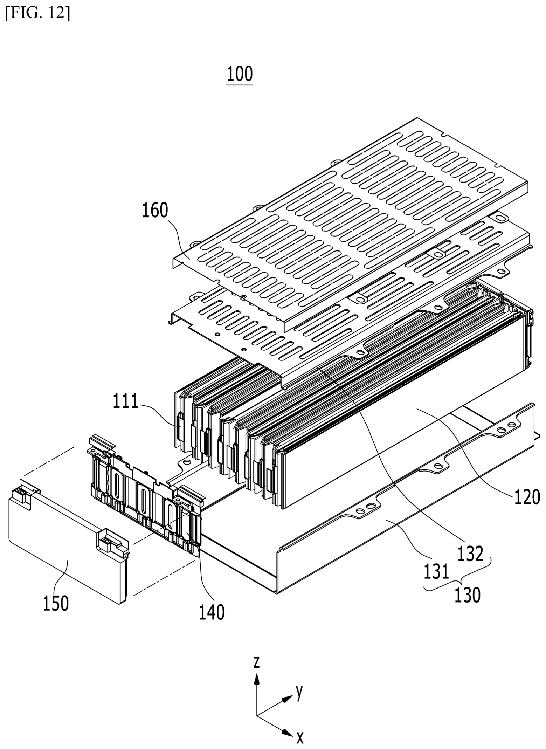

FIG. 11 is a plan view of a battery module 100 according to certain embodiments of the present disclosure. FIG. 12 is an exploded perspective view showing a battery module according to certain embodiments of the present disclosure.

Referring again to FIGS. 5, 11 and 12, the battery module 100 according to certain embodiments of the present disclosure may include a busbar frame assembly 140 located on one side of the battery cell stack 120 in a direction in which the electrode lead 111 protrudes (+y-axis direction and -y-axis direction in FIG. 5). The busbar frame assembly 140 may include a busbar frame 141 and at least one busbar 142 disposed on the busbar frame 141 and connected to the electrode lead 111. The busbar frame 141 is a member for preventing the electrode lead 111 and the busbar 142 from coming into contact with other parts of the battery cell 110 to cause a short circuit, and may also include an electrically insulating material. Specifically, at least one busbar 142 may be mounted on one surface of the busbar frame 141, and the other surface of the busbar frame 141 may face the battery cell stack 120. The electrode lead 111 may pass through a slit formed in the busbar frame 141 and then be connected to the busbar 142.

Meanwhile, the busbar frame assembly 140 may further include a busbar frame assembly cover 150 that covers the busbar frame assembly 140. Specifically, the busbar frame assembly cover 150 may cover the one surface of the busbar frame 141 on which the busbar 142 is mounted. The busbar frame assembly cover 150 can cover and insulate a plurality of busbars 142 for electrically connecting the battery cells 110, the terminal (not shown) of the battery module 100, and the electrode leads 111 to protect them from the outside. It is also possible to prevent disassembly of the battery module 100 by unspecified persons other than an administrator.

Although not shown in the figure, the busbar frame assembly cover 150 can be detachably coupled to the busbar frame 141 by a hook structure. By the hook structure, the busbar frame assembly cover 150 can be fixed to a correct position of the busbar frame 141, and can be easily assembled and disassembled in a one-touch manner.

Although not shown in the figure, in order to prevent the busbar frame assembly cover 150 from moving, a rib structure or the like having a predetermined shape may be provided on the inner wall of the busbar frame 141.

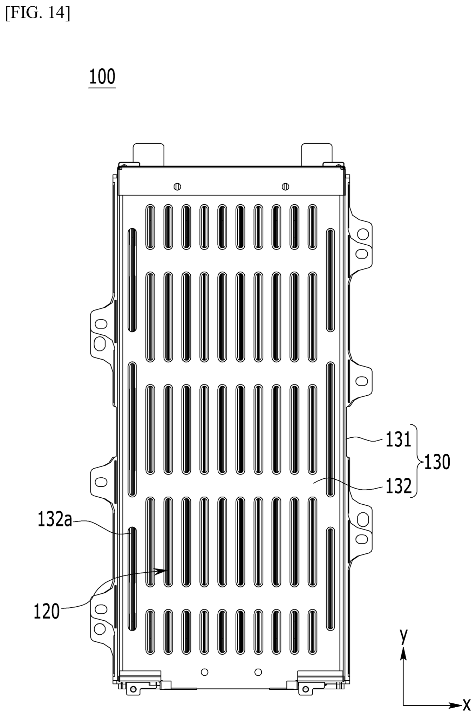

FIG. 13 is a perspective view of a battery module 100 according to certain embodiments of the present disclosure. FIG. 14 is a plan view of a battery module 100 according to certain embodiments of the present disclosure. Specifically, FIG. 14 shows the appearance of the battery module 100 when viewed along the -z axis on the xy plane.

Referring to FIGS. 13 and 14, at least one venting hole 132a for discharging internal gas may be formed at the upper end part of the module frame 130. In one embodiment, at least one venting hole 132a may be formed in the upper end module frame 132 of the module frame 130. Therefore, gas inside the battery module 100 may be smoothly discharged to the outside through the venting hole 132a formed in the module frame 130.

The number of venting holes 132a may be one or more, and may be determined in various ways depending on the capacity of the battery cell 110, the numerical value of the battery module 100, and the like. The shape of the venting hole 132a is not limited to the elliptical shape shown in the figure.

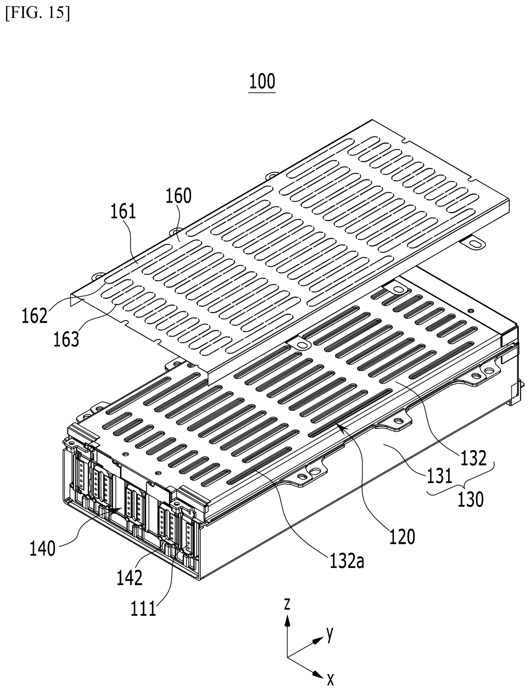

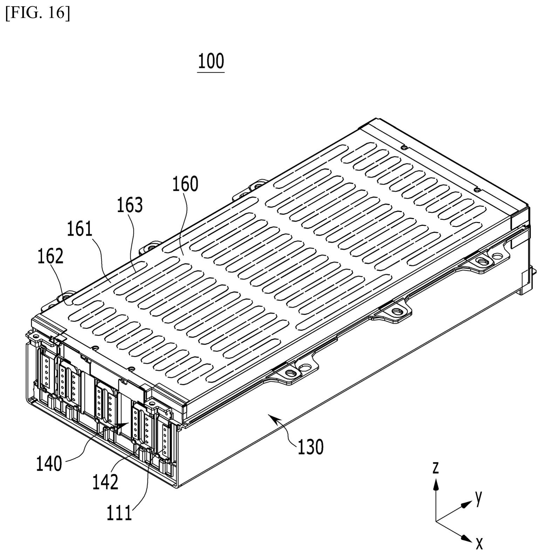

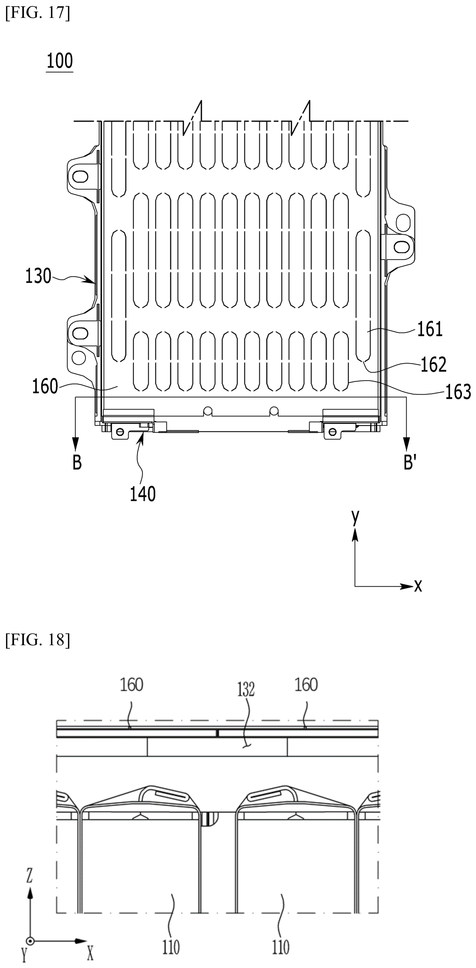

FIG. 15 is an exploded perspective view of a battery module 100 according to certain embodiments of the present disclosure. FIG. 16 is a perspective view of a battery module 100 according to certain embodiments of the present disclosure. FIG. 17 is a plan view of a battery module 100 according to certain embodiments of the present disclosure. Specifically, FIG. 17 shows a part of the appearance of the battery module 100 when viewed along the -z axis on the xy plane. FIG. 18 is a cross-sectional view showing a cross section of a battery module 100 taken along the cutting line B-B' of FIG. 17.

Referring to FIGS. 15 to 18, the battery module 100 may include a module frame cover 160 that covers the upper end part of the module frame 130. In one embodiment, the module frame cover 160 may cover the upper end module frame 132 of the module frame 130.

The module frame cover 160 may be formed with a rupture part 161 that is located to correspond to the venting hole 132a and structured to be ruptured at a certain pressure or higher. The shape of the rupture part 161 is not particularly limited as long as it is blocked in a normal time and then can induce the discharge of internal gas while being ruptured at a certain pressure or higher. The rupture part 161 described below is an exemplary structure that exhibits such a function.

An opened part 163 may be formed in an area excluding the connecting part 162 in the circumference of the rupture part 161. Here, the opening 163 refers to a part of the module frame cover 160 that is partially perforated. The rupture part 161 may be configured to be connected to the module frame cover 160 by the connecting part 162. When viewed from the upper end part of the module frame cover 160 in a direction perpendicular to the upper end of the module frame cover 160, the opening 163 may be formed outside the venting hole 132a.

When a typical battery module 100 is used, the connecting part 162 is not ruptured. Since the opening 163 is formed outside the venting hole 132a, the venting hole 132a is blocked by the rupture part 161 in the general operating state of the battery module 100. When a thermal runaway phenomenon of the battery cells 110 occurs and gas is generated inside the battery module 100, the venting hole 132a is exposed to the outside while the connection part 162 is ruptured due to the pressure inside the battery module 100. That is, due to the rupture of the venting hole 132a and the connecting part 162, the gas inside the battery module 100 is discharged through the hole on the module frame cover 160 formed along the shape of the opening part 163.

Therefore, the venting hole 132a can perform the function of discharging gas only when the internal pressure increases above a certain standard due to the thermal runaway of the battery cells 110 inside the battery module 100. Thereby, while preventing a situation in which the stability of the battery module 100 is reduced, such as the internal configuration being exposed to the outside, the stability of the battery module 100 is improved and the whole performance of the battery module 100 can be secured.

According to certain other aspects of the present disclosure, a device comprising at least one battery pack 1000 is provided.

The battery pack 1000 can be applied to various devices, which include, for example, transportation vehicles such as electric bicycles, electric vehicles, and hybrids, and energy storage systems (ESS). However, without being limited thereto, the battery pack may be applied to various devices using secondary batteries.

In the embodiments above, expressions indicating directions such as "front," "rear," "left," "right," "up," and "down" have been used. These expressions are used only to facilitate the description, and may vary, for example, depending on the location of a target object or an observer.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

1000: battery pack
1100: pack frame
1200: partition wall
1300: block
100: battery module
130: module frame
140: busbar frame assembly
160: module frame cover

## Claims

1. A battery pack comprising a plurality of battery modules and a pack frame in which the battery modules are housed,
wherein the battery module comprises:
a battery cell stack in which a plurality of battery cells including electrode leads are stacked; and
a module frame in which the battery cell stack is housed,
wherein the battery pack comprises a block located to face one surface of the battery module in a direction in which the electrode leads protrude, and
wherein the block is attached to one surface or both surfaces of a partition wall for housing the battery modules.

2. The battery pack according to claim 1,
wherein the block comprises a refractory material.

3. The battery pack according to claim 1,
wherein the battery module comprises a busbar that connects the electrode leads, and
the one surface of the battery module is opened so that the electrode leads and the busbar are exposed on the one surface of the battery module in a direction in which the electrode leads protrude.

4. The battery pack according to claim 1,
wherein the one surface of the battery module in the direction in which the electrode lead protrudes abuts on the block.

5. The battery pack according to claim 1,
wherein the battery module comprises a busbar frame assembly located on one side of the battery cell stack in a direction in which the electrode leads protrude, and
the busbar frame assembly comprises a busbar frame; and at least one busbar disposed on the busbar frame and connected to the electrode leads.

6. The battery pack according to claim 5,
comprising a busbar frame assembly cover that covers the busbar frame assembly.

7. The battery pack according to claim 1,
wherein the upper end part of the module frame is formed with at least one venting hole for discharging internal gas.

8. The battery pack according to claim 7,
comprising a module frame cover that covers the upper end part of the module frame.

9. The battery pack according to claim 8,
wherein the module frame cover is formed with a rupture part that is located so as to correspond to the venting hole and structured to be ruptured at a certain pressure or higher.

10. The battery pack according to claim 9,
wherein an opening is formed in an area excluding a connecting part in the circumference of the rupture part, and
the rupture part has a form connected to the module frame cover by the connecting part.

11. The battery pack according to claim 10,
wherein on the upper end part of the module frame cover, the opening is formed outside the venting hole when viewed along a direction perpendicular to the upper end part of the module frame cover.

12. A device comprising a battery pack according to claim 9.
